# EUROPÄISCHE PATENTANMELDUNG

(11) **EP 0 980 739 A2**
(43) Veröffentlichungstag der Anmeldung: **23.02.2000**
(21) Anmeldenummer: 99114289.4
(22) Anmeldetag: 29.07.1999
(51) Int. Cl.: B24B 5/04, B24B 5/50, B24B 41/04, B23Q 1/26

(54) **Schleifmaschine**

(30) Priorität: 20.08.1998 DE 19837858
(71) Anmelder: Wacker Siltronic Gesellschaft für Halbleitermaterialien Aktiengesellschaft, 84489 Burghausen (DE)
(72) Erfinder: Vorbuchner, Robert, Dr., 84489 Burghausen (DE)
(74) Vertreter: Schuderer, Michael, Dr.

(57) **Zusammenfassung**

Schleifmaschine, die einen Schwenkkopf (1) mit zumindest einer Einstechscheibe (2), einer Topfscheibe (3) und einen Messtaster (7) zum Messen des Durchmessers und der Länge des Werkstücks, aufweist.

## Beschreibung

Die Erfindung betrifft eine Schleifmaschine und ein Verfahren zum Schleifen von Halbleiterstäben.

Monokristalline Halbleiterstäbe, die nach dem Czorchralski-Tiegelziehverfahren hergestellt werden, haben eine unregelmäßige Oberfläche und schwankende Länge. Die unregelmäßige Oberfläche äußert sich derart, daß der Durchmesser über den Halbleiterstab schwankt und an einer Stelle geringer und an einer anderen Stelle wieder größer ist. Dies kann bis zu einer "korkenzieherförmigen" Form führen. Die Folge ist, daß der Stab auf den spezifizierten Solldurchmesser abgeschliffen werden muß, damit der Stab einen gleichmäßigen Durchmesser hat, bevor er in Scheiben geschnitten wird, den sogenannten Wafern.

Üblicherweise werden die Halbleiterstäbe durch das Schleifen mit einer Einstechscheibe oder Topfscheibe geschliffen. Dabei handelt es sich bei der Einstechscheibe um eine Schleifscheibe, bei der die Breite der Umfangsfläche der Scheibe zum Schleifen verwendet wird und eine Topfscheibe ist eine Schleifscheibe, die ein gerader oder kegeliger, kreisrunder Schleifkörper mit einseitiger, tiefer Aussparung und Bohrung ist, bei der die Dicke des Bodens oder des Steges kleiner als 1/3 der Gesamtbreite ist, das heißt, daß, wenn ihr Befestigungsmittel nach unten weist, bildet ihr oberer Rand das Schleifelement.

Beim herkömmlichen Grob- und Feinschleifen mit einer Einstechscheibe wird diese beim abschließenden Fein- oder Oszillierschleifen an der jeweiligen linken oder rechten Kante stark deprofiliert. Aufgrund dieser Deprofilierung nimmt die effektive Breite des Schleifbelags deutlich ab. Dies geschieht deshalb, weil der Halbleiterstab mit einem seitlichen Vorschub an der Einstechscheibe vorbeigeführt wird und somit wird die Einstechscheibe besonders an ihren Flanken stark abgenützt. Der Nachteil daran ist, daß der Einstechversatz öfters korrigiert werden muß, d.h. die Einstechscheibe muß oft abgerichtet werden, um wieder die volle Schleifbreite zur Verfügung zu stellen, was zur Folge hat, daß wertvoller Diamentenbelag wirkungslos verlorengeht. Dies führt zu höheren Kosten beim Schleifmaterial. Ein weiterer Nachteil, der durch das Abrichten entsteht, ist ein erhöhter Kostenfaktor, da die Maschine und das Personal in dieser Zeit der Produktion nicht zur Verfügung steht. Zum anderen sind derartige Schleifmaschinen nicht fehlertolerant. Dies bedeutet, es muß vor dem Schleifen immer der entsprechende Durchmesser eingegeben werden. Dabei können Eingabefehler geschehen. Diese können dazu führen, daß zuviel vom Halbleiterstab abgeschliffen wird und er insofern unbrauchbar wird. Des weiteren kann es aufgrund einer derartigen falschen Eingabe erfolgen, daß die Scheibe zuviel Vorschub hat und dadurch in den Stab herein fährt und diesen und unter Umständen auch die Schleifmaschine beschädigt.

Beim Schleifen mit der Topfscheibe wird der Halbleiterstab, der mit seitlichem Vorschub an der rotierenden Topfscheibe vorbeigeführt wird, zwar schonend abgeschliffen. Nachteilig ist im Vergleich zum Schleifen mit der Einstechscheibe, daß diese Form des Schleifens für einen Stab die ungefähr doppelte Zeit des Schleifens mit der Einstechscheibe benötigt.

Aufgabe der Erfindung ist es, die Nachteile des Standes der Technik zu überwinden und insbesondere eine Vorrichtung und ein Verfahren zur Verfügung zu stellen, mit dem Halbleiterstäbe schnell und ohne sich selbst oder eine Schleifmaschine zu beschädigen, geschliffen werden können.

Diese Aufgabe wird durch die Erfindung gelöst.

Gegenstand der Erfindung ist eine Schleifmaschine, die einen Schwenkkopf (1) mit zumindest einer Einstechscheibe (2), einer Topfscheibe (3) und einen Messtaster (7) zum Messen des Durchmessers und der Länge des Werkstücks (6), aufweist.

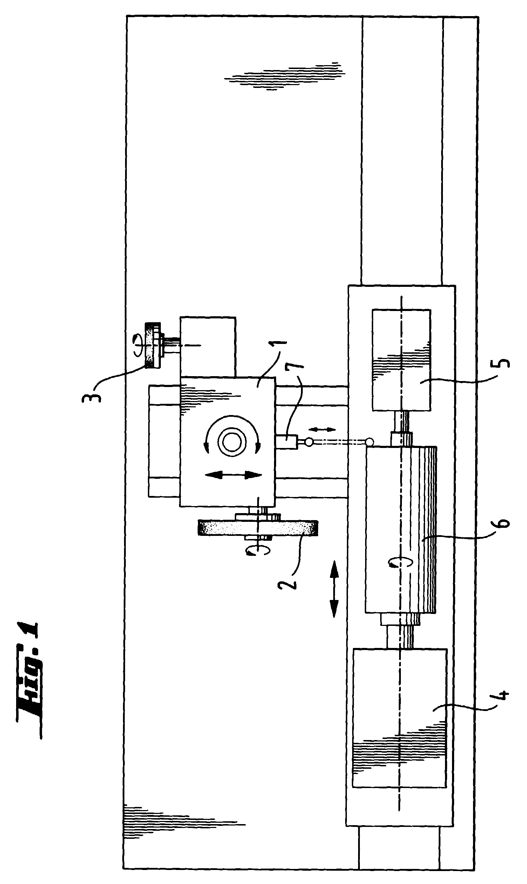

Figur 1 ist eine schematische Darstellung der erfindungsgemäßen Schleifmaschine

Eine derartige Schleifmaschine für Halbleiterstäbe weist einen Schwenkkopf (1) auf, auf dem eine Einstechscheibe (2) und eine Topfscheibe (3) angebracht sind. Durch Schwenken des Schwenkkopfes (1) (um 180 °) kann entweder die Einstechscheibe (2) oder die Topfscheibe (3) den zwischen Werkstückantrieb (4) und Reitstock (5) eingespannten Halbleiterstab (6) schleifen. Beide Schleifecheiben, die Einstechecheibe (2) und die Topfschleifscheibe (3) sind mit einem Diamantschleifbelag versehen. Des weiteren weist die Schleifmaschine einen Messtaster (7) auf, der vorzugsweise an dem Schleifspindelstock montiert ist. Dieser Messtaster (7) fährt aus, um die Länge des Stabes (6) zu messen, wobei der bereits vom Operator eingegebene Längenwert in einem Rechner mit dem gemessenen Längenwert verglichen wird.

Ein weiterer Gegenstand der Erfindung ist ein Verfahren zum Schleifen von Halbleiterstäben, wobei ein Halbleiterstab (6) in einem Arbeitsgang durch Einstechschleifen und Topfschleifen geschliffen wird, wobei das Topfschleifen bevorzugt nach dem Einstechschleifen erfolgt.

Bei dem erfindungsgemäßen Verfahren zum Schleifen von Halbleiterstäben, wird ein Halbleiterstab (6), insbesondere ein monokristalliner Halbleiterstab, zwischen den Werkstückantrieb (4) und dem Reitstock (5) befestigt. Dabei mißt ein Messtaster (7) zuerst die Länge des Halbleiterstabes (6), indem er an das eine Ende des Halbleiterstabes fährt, dabei wird der Abstand zu einem bekannten Punkt, wie zum Beispiel dem Werkstückantriebs (4) gemessen. Dieser Wert wird mit dem Wert, den das Bedienungspersonal bereits eingegeben hat, verglichen. Sollte dieser Wert um eine bestimmte Toleranz abweichen, zum Beispiel ±5 mm abweichen, wird das Programm abgebrochen, da sonst die Schleifmaschine oder der Halbleiterstab (6) selbst beschädigt werden kann. Das Bedienungspersonal wird darauf hingewiesen, was es zu tun hat. Sodann wird der Durchmesser zuzüglich des Aufmasses gemessen, wobei das Aufmaß ein Wert ist, der ein Sicherheitswert ist, um den Unregelmäßigkeiten des unförmigen Halbleiterstabs (6) Rechnung zu tragen. Dazu wird die Stabdrehung eingeschalten und die gesamte Manteloberfläche wird auf Überdurchmesser überprüft. Trifft der Meßtaster (7) während des Abfahrens der Manteloberfläche auf einen Überdurchmesser, so erscheint eine entsprechende Fehlermeldung mit der jeweiligen Anweisung, welche Maßnahme zu ergreifen ist.

Eine Erfassung der Form des Halbleiterstabes (6) ist deshalb besonders wichtig, da die Schleifmaschine zum Schleifen zylindrischer Werkstücke mit geringem Überdurchmesser von im Mittel ≦ 1 mm ausgelegt wird. Um die Bearbeitungszeit nicht unermeßlich hoch werden zu lassen, wird mit möglichst geringem Aufmaß gearbeitet, wodurch allerdings die Bruchgefahr sehr zunimmt.

Dann erfolgt vorzugsweise das Einstechschleifen, dem vorzugsweise das Topfschleifen folgt, wobei vorzugsweise der Halbleiterstab (6) mit einem Vorschub an der Einstechscheibe (2), bzw. an der Topfscheibe (3) vorbeigeführt wird.

Mit der erfindungsgemäßen Schleifmaschine können auch mit einem gegebenenfalls zweiten Meßsystem Flats und Rillen geschliffen werden. Diese zeigen den Abnehmern des Halbleitermaterials die Kristallorientierung an.

## Patentansprüche

1. Schleifmaschine, die einen Schwenkkopf (1) mit zumindest einer Einstechscheibe (2), einer Topfscheibe (3) und einen Messtaster (7) zum Messen des Durchmessers und der Länge des Werkstücks, aufweist.

2. Schleifmaschine nach Anspruch 1, dadurch gekennzeichnet, daß der Messtaster (7) die ermittelten Werte über einen Rechner mit vorgegebenen Werten abgleicht.

3. Verfahren zum Schleifen von Halbleiterstäben, dadurch gekennzeichnet, daß ein Halbleiterstab (6) in einem Arbeitsgang durch Einstechschleifen und Topfschleifen geschliffen wird.

4. Verfahren zum Schleifen von Halbleiterstäben nach Anspruch 3, dadurch gekennzeichnet, daß die Länge des Halbleiterstabes (6) gemessen wird.

5. Verfahren zum Schleifen von Halbleiterstäben nach Anspruch 3, dadurch gekennzeichnet, daß der Durchmesser über die Länge des rotierenden Halbleiterstabes (6) gemessen wird.
